Europäisches Patentamt

European Patent Office

Office européen des brevets

(19)

(11) Veröffentlichungsnummer: **0 284 756 B1**

## (12) EUROPÄISCHE PATENTSCHRIFT

(45) Veröffentlichungstag der Patentschrift: **24.06.92**

(21) Anmeldenummer: **88102281.8**

(22) Anmeldetag: **16.02.88**

(51) Int. Cl.⁵: $B64D\ 7/08$

(54) Waffenträger an Flugzeugen.

(30) Priorität: **01.04.87 DE 3710985**

(43) Veröffentlichungstag der Anmeldung:
**05.10.88 Patentblatt 88/40**

(45) Bekanntmachung des Hinweises auf die
Patenterteilung:
**24.06.92 Patentblatt 92/26**

(84) Benannte Vertragsstaaten:
**DE FR GB IT**

(56) Entgegenhaltungen:
**EP-A- 0 039 391**
**FR-A- 1 315 708**
**GB-A- 2 166 526**
**US-A- 3 040 629**

(73) Patentinhaber: **Messerschmitt-Bölkow-Blohm**
**Gesellschaft mit beschränkter Haftung**
**Robert-Koch-Strasse**
**W-8012 Ottobrunn(DE)**

(72) Erfinder: **Lehmann, Werner**
**Luitpoldstrasse 7**
**W-8034 Germering(DE)**

## Beschreibung

Die Erfindung betrifft einen Waffenträger an Flugzeugen, der an diesen lösbar angeordnet ist und der zur entriegelbaren Arretierung von Flugkörpern einen von einer Waffenabschußschiene aufnehmbaren Waffenadapter sowie einen Verriegelungsmechanismus enthält.

Derartige Waffenträger werden dazu eingesetzt, um Waffen für deren Transport und Abwurf an Flugzeugen aufzuhängen.

Aus der EP 0 039 391 geht beispielsweise ein an Luftfahrzeugen angeordneter Waffenträger hervor, der zwar einen als Klauen ausgebildeten Waffenadapter aufweist, jedoch ist bei dieser Einrichtung eine waffenträgerseitige automatische Vor- und Entriegelungsmöglichkeit des Waffenadapters nicht ersichtlich.

Der Erfindung liegt die Aufgabe zugrunde, einen Waffenträger derart zu verbessern, daß unter Vermeidung der vorgenannten Nachteile Flugkörper an einem standardisierten Waffenträger selbsttätig arretiert und auf aktive Weise wieder selbsttätig von diesem gelöst werden können.

Diese Aufgabe wird durch die im Anspruch 1 angegebenen Merkmale gelöst.

Weitere weiterbildende Maßnahmen werden im Anspruch 2 aufgezeigt.

Die Vorteile der Erfindung bestehen insbesondere darin, daß nicht mehr wie bisher üblich, der Waffenträger oder die gesamte Abschußeinrichtung für jeden einzelnen Flugkörpertyp jedesmal am Flugzeug ausgetauscht werden muß. Erfindungsgemäß kann nun der jeweilige Flugkörper entweder am standardisierten Waffenträger oder falls die Anschlußvorrichtung nicht geeignet ist, mittels des zugehörigen preiswerten Waffenadapters rasch am Waffenträger bzw. am Flugzeug angebracht werden, wobei dieser hierfür in seiner Funktionsweise nicht modifiziert werden muß. Darüberhinaus kann der Flugkörper sich selbst und den Waffenadapter beim Beladevorgang selbsttätig auf einfache Weise verriegeln. Beim Abschuß löst sich der Flugkörper ebenfalls selbsttätig und aktiv vom Waffenadapter und entsperrt dabei die gesamten Verriegelungen für den nächsten Beladevorgang.

Die Erfindung wird nachfolgend anhand eines Ausführungsbeispieles näher beschrieben und in der Zeichnung dargestellt. Es zeigen

Fig. 1    eine schematisch dargestellte Seitenansicht des Waffenträgers mit dem Waffenadapter und dem Flugkörper in verriegelter Position,

Fig. 2    einen Schnitt bei I-I nach Fig. 1.

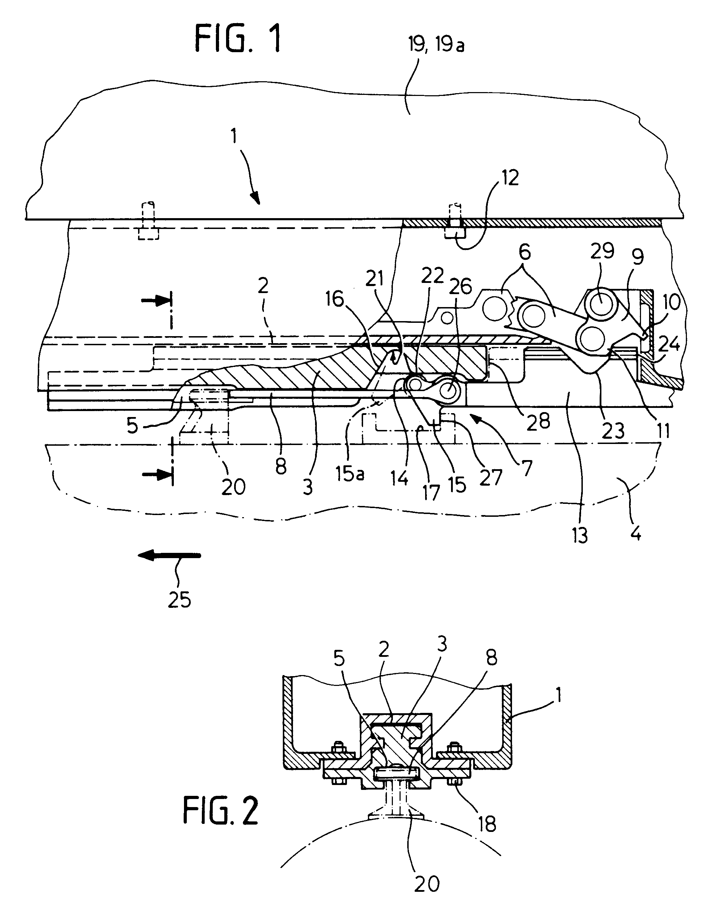

In der Fig. 1 ist mit 1 der Waffenträger bezeichnet, an dem eine Waffenabschußschiene 2 - künftig nur Schiene genannt - zum Abschuß von Flugkörpern erkennbar ist, die hier alternativ zur verschiebbaren Lagerung eines Waffenadapters 3 dient. Der Waffenadapter 3 weist eine Ausnehmung 5 zur Aufnahme eines T-Stückes 20 am Flugkörper 4 für dessen Aufhängung auf. Als Teil der Arretierungseinrichtung 7, ist in der Fortsetzung der Ausnehmung 5 eine Schubstange 8 angeordnet, die an einem in der Schiene 2 des Waffenträgers 1 gleitenden Gleitriegel 13 bei 26 angeschlossen ist. Ferner ist an der Arretierungseinrichtung 7 ein mit einer Stützrolle 14 ausgestatteter Haken 15 vorgesehen, der an diesem Anschluß 26 zwischen der Schubstange 8 und dem Gleitriegel 13 schwenkbar gelagert ist.

Im Bereich 21 des Hakens 15 ist am Waffenadapter 3 eine Führungskulisse 16 zur Führung der Stützrolle 14 bzw. des Hakens 15 angeordnet. Der Waffenträger 1 verfügt über einen bekannten totpunktüberschreitenden Verriegelungsmechanismus 6, der normalerweise zum Arretieren von Flugkörpern dient und deshalb nicht verändert werden darf. Dieser Verriegelungsmechanismus 6, dessen genaue Ausbildung nicht Gegenstand der Erfindung ist und der daher in Fig.1 auch nur angedeutet ist, enthält einen drehbar gelagerten Riegel 9, an dem eine Nase 10 und ein Ansatz 11 vorgesehen ist.

Außerdem ist der Waffenträger 1 mit Verbindungselementen 12 für eine lösbare Befestigung zur Abschußeinrichtung 19 oder direkt zum Flugzeug 19a, die beide nur angedeutet sind, versehen. Des weiteren sind am Waffenträger 1 bekannte Abpratz- oder Halterungsmitteln zum Stabilisieren des Flugkörpers 4 vorgesehen, die aus Vereinfachungsgründen jedoch nicht dargestellt sind.

Der Waffenadapter 3 ist ebenfalls für einen raschen Austausch oder für eine schnelle Abnahme mittels Schnellverschlußelemente 18 am Waffenträger 1 befestigbar.

Der Funktionsablauf erfolgt wie anschließend beschrieben:

Der Gleitriegel 13 wird zusammen mit dem Waffenadapter 3 in die Schiene 2 des Waffenträgers 1 geschoben, nachdem vorher die Schubstange 8 in die Ausnehmung 5 des Waffenadapters 3 eingeführt wurde. Der Waffenadapter 3 wird anschließend mittels den Schnellverschlußelementen 18 am Waffenträger 1 befestigt. In dieser dabei entsperrten Position, befindet sich der Haken 15 in einer zur Flugrichtung 25 weisenden Lage bei 15a und dessen Stützrolle 14 liegt gleichzeitig an der Führungskulisse 16 bei 21 des Waffenadapters 3 an. Der Riegel 9 des Verriegelungsmechanismus 6 befindet sich - in nicht dargestellter Weise - ebenfalls wie der Gleitriegel 13 bei 28, in einer entsperrten und zur Flugrichtung 25 weisenden Position.

Wenn nun zum Beladen des Waffenadapters 3 mit dem Flugkörper 4, dessen T-Stück 20 zur Flugkörperaufhängung in die Ausnehmung 5 entgegen die Flugrichtung 25 und zwar gegen die Schubstange 8 geschoben wird, verschwenkt diese den mittels der Kulissenführung 16 über die Stützrolle 14 geführten Haken 15 in die Flugkörperausnehmung 17 am Flugkörper 4. Hierdurch kommt der Haken 15 bei 27 und die Stützrolle 14 bei 22 zum Anliegen und der Flugkörper 4 wird dadurch in der Ausnehmung 5 des Waffenadapters 3 sicher arretiert.

Mit der Schubbewegung der Schubstange 8 wird gleichzeitig der Gleitriegel 13 gegen die Flugrichtung 25 bewegt, der mit dem Gleitriegelansatz 24 auf die Nase 10 des Riegels 9 einwirkt. Der Riegel 9 wird dadurch um den Drehpunkt 29 so weit verschwenkt, bis dessen Ansatz 11 durch seine Anlage am Auslauf der Kulisse 23 des Gleitriegels 13, die Arretierungseinrichtung 7 für den Flugkörper 4 gegen den Waffenträger 1 verriegelt. Der Verriegelungsmechanismus 6 wird dabei mittels der angedeuteten Kniehebeln bzw. der nicht dargestellten Federn in bekannter Weise gesperrt.

Für den Abschuß und zum Lösen des Flugkörpers 4 vom Waffenadapter 3, wird der Flugkörperantrieb zum Beschleunigen in Flugrichtung 25 gezündet, wodurch mittels der Flugkörperausnehmung 17 der Haken 15 in die gleiche Richtung bewegt und dabei durch die Kulissenführung 16 in eine den Flugkörper 4 freigebende Position 15a geschwenkt wird.

Die vorbeschriebene Freigabe des Flugkörpers 4 für den Abschuß von der schienenartigen Ausnehmung 5 des Waffenadapters 3, kann selbstverständlich erst dadurch erfolgen, daß dabei der Gleitriegel 13 über den Anschluß 26 mit dem Haken 15, in Flugrichtung 25 mitbewegt wird. Dadurch wird der Riegel 9 über dessen Ansatz 11 und dessen Nase 10 zum Entriegeln des Gleitriegels 13 und nachfolgend des Hakens 15 verschwenkt und der Gleitriegel erreicht damit wiederum die Ausgangsposition bei 28. Die Arretierungseinrichtung 7 mit der Schubstange 8, dem Gleitriegel 13 und dem Haken 15 mit seiner Stützrolle 14, die sich im Bereich 21 der Kulissenfüllung 16 befindet, werden genauso wie der Riegel 9 mit seiner Nase 10 durch die Federkraft des Verriegelungsmechanismus 6 nach dem Abschuß des Flugkörpers 4 in Ruhestellung gehalten.

In diesem entriegelten Zustand steht nun der Waffenadapter 3 wieder für eine Neubestückung zur Verfügung. Der Waffenadapter 3 kann auch vom Waffenträger 1, für dessen Freigabe für eine andere Waffenbeladung oder für einen Waffenadaptertausch, rasch mittels der Schnellverschlußelemente 18 oder mit der Hilfe von anderen Verbindungsmitteln entnommen werden.

## Patentansprüche

1. Waffenträger an Flugzeugen, der an diesen lösbar angeordnet ist und der zur entriegelbaren Arretierung von Flugkörpern einen von einer Waffenabschußschiene aufnehmbaren Waffenadapter sowie einen Verriegelungsmechanismus enthält, **dadurch gekennzeichnet,** daß der Waffenträger (1) eine Arretierungseinrichtung (7) aufweist, die mit einem in einer Führungskulisse (16) des Waffenadapters (3) mittels einer Stützrolle (14) geführten und mit einer Flugkörperausnehmung (17) korrespondierenden Haken (15) versehen ist, der einerseits mit einer mittels eines flugkörperseitigen T-Stückes (20) in einer Ausnehmung (5) des Waffenadapters (3) verschiebbaren Schubstange (8) und andererseits mit einem in der Waffenabschußschiene (2) bewegbaren und den Verriegelungsmechanismus (6) betätigenden Gleitriegel (13) verbunden ist.

2. Waffenträger nach Anspruch 1, dadurch **gekennzeichnet**, daß der Waffenadapter (3) mittels Schnellverschlußelementen (18) am Waffenträger (1) lösbar befestigt ist.

## Claims

1. Weapon carrier for aircraft, detachably attached and comprising a weapon adaptor to be received by a weapon-launching rail for releasably arresting missiles and a locking mechanism, characterised in that the weapon carrier (1) comprises an arresting device (7) which is provided with a hook (15), which is guided by means of a support roller (14) in a guide gate (16) of the weapon adaptor (3) and which corresponds with a missile recess (17), which hook is connected on the one hand with a push rod (8) which is displaceable in a recess (5) of the weapon adaptor (3) by means of a T-member (20) on the missile, and on the other hand with a slide bolt (13) which is displaceable in the missile-launching rail (2) and which actuates the locking mechanism (6).

2. Weapon carrier according to claim 1, characterised in that the weapon adapter (3) is releasably attached to the weapon carrier (1) by means of instantaneous locking elements (18).

## Revendications

1. Elément support d'armes sur des avions, qui est disposé de façon amovible sur ces derniers et qui, pour le blocage avec possibilité de déverrouillage d'engins volants, comporte un adaptateur d'armes, pouvant être reçu par un rail de lancement d'armes, ainsi qu'un mécanisme de verrouillage, caractérisé par le fait que l'élément support d'armes (1) présente un dispositif de blocage (7) muni d'un crochet (15) qui est guidé dans une coulisse de guidage (16) de l'adaptateur d'armes (3) au moyen d'un galet d'appui (14) et correspond à un évidement (17) dans l'engin volant et qui est relié d'une part à une tige (8) déplaçable dans un évidement (5) de l'adaptateur d'armes (3) au moyen d'un élément en T (20) côté engin volant, et d'autre part à un verrou coulissant (13) déplaçable dans le rail (2) de lancement d'armes et actionnant le mécanisme de verrouillage (6).

2. Elément support d'armes selon la revendication 1, caractérisé par le fait que l'adaptateur d'armes (3) est fixé de manière amovible sur l'élément support d'armes (1) au moyen d'éléments (18) à fermeture rapide.

## FIG. 1

## FIG. 2